# EUROPÄISCHE PATENTSCHRIFT

(11) **EP 3 354 623 B1**
(45) Veröffentlichungstag und Bekanntmachung des Hinweises auf die Patenterteilung: **13.11.2019**
(21) Anmeldenummer: 17152951.4
(22) Anmeldetag: 25.01.2017
(51) Int. Cl.: C01G 55/00

(54) **VERFAHREN ZUR HERSTELLUNG HOCHREINEN IRIDIUM(III)CHLORID-HYDRATS**
METHOD FOR THE PRODUCTION OF HIGH PURITY IRIDIUM (III) CHLORIDE HYDRATE
PROCÉDÉ DE PRODUCTION D'UN HYDRATE DE CHLORURE D'IRIDIUM (III) DE GRANDE PURETÉ

(43) Veröffentlichungstag der Anmeldung: 01.08.2018
(73) Patentinhaber: Heraeus Deutschland GmbH & Co. KG, 63450 Hanau (DE)
(72) Erfinder: Walter, Richard, 63755 Alzenau (DE); Fuchs Alameda, Jörg, 63599 Biebergemünd (DE); Imgrund, Christian, 63825 Sommerkahl (DE); Neumann, Christian, 35410 Hungen (DE)
(74) Vertreter: Heraeus IP

(56) Entgegenhaltungen:
- Holleman-Wiberg: "Iridium(III)-Verbindungen", Lehrbuch der Anorganischen Chemie - 91.-100- Auflage, 1. Januar 1985 (1985-01-01), Seite 1200, XP055367484, Gefunden im Internet: URL:www [gefunden am 2017-04-26]
- DATABASE WPI Week 201257 2012 Thomson Scientific, London, GB; AN 2012-A40080 XP002769670, & RU 2 437 838 C1 (KRASY NONFERR METAL WKS STOCK CO) 27. Dezember 2011 (2011-12-27)

## Beschreibung

Die Erfindung betrifft ein Verfahren zur Herstellung hochreinen Iridium(III)chlorid-Hydrats. Hochreines Iridium(III)chlorid-Hydrat eignet sich hervorragend als Ausgangsmaterial zur Herstellung verschiedenster als Triplett-Emitter in OLEDs (organic light emitting diodes, organische lichtemittierende Dioden) verwendbarer Ir(III)-Komplexverbindungen.

Iridium(III)chlorid-Hydrat ist kommerziell erhältlich, beispielsweise als IrCl₃ · n H₂O von Heraeus.

Iridium(III)chlorid-Hydrat ist ein amorpher Feststoff. Es lässt sich durch Reduktion von Iridium(IV)chlorid-Hydrat oder H₂[IrCl₆]-Lösung mittels Oxalsäure oder Hydrazin darstellen. Will man allerdings hochreines Iridium(III)chlorid-Hydrat herstellen, so stoßen diese Methoden an Grenzen. Eine Schwierigkeit ist dabei, dass die zu reduzierenden Iridium(IV)-Verbindungen von Hause aus einen kleinen, von Charge zu Charge unterschiedlich großen Anteil an Ir(III) enthalten können. Sowohl Oxalsäure als auch Hydrazin neigen neben ihrer Reduktionswirkung zu Zersetzungs- und Komplexbildungsreaktionen und geben damit Anlass zur Verunreinigung gebildeten Iridium(III)chlorid-Hydrats mit quantitativ elementaranalytisch nachweisbarem Kohlenstoff bzw. Stickstoff.

Gmelins Handbuch der Anorganischen Chemie, 8. Auflage, 1939 berichtet auf den Seiten 58-59 über eine Substanz der Formel IrCl₃ · x H₂O, die durch Eindunsten von H₃[IrCl₆]-Lösung erhalten werden kann. Zu H₃[IrCl₆] wiederum wird auf der Folgeseite 60 ausgeführt, dass die Reduktion von H₂[IrCl₆] mit Alkohol bis zur beginnenden Metallabscheidung zwar zu Lösungen führt, die sich wie die einer komplexen Säure verhalten, da mit Alkalichlorid sofort die entsprechenden Salze wie K₃[IrCl₆] entstehen; es ließe sich aber in keiner Weise eine Substanz isolieren, die der Formel H₃[IrCl₆] bzw. einem Hydrat entspricht. Im Übrigen wird noch der Hinweis auf das schon auf Seite 58 genannte IrCl₃ · x H₂O gegeben.

RU 2 437 838 C1 offenbart ein Verfahren zur Herstellung des Hydrats von IrCl₃.

In der vorliegenden Patentanmeldung wird zwischen Iridium(III)chlorid-Hydrat und hochreinem Iridium(III)chlorid-Hydrat unterschieden. Der hierin verwendete Begriff "Hochreines Iridium(III)chlorid-Hydrat" bezeichnet ein festes Iridium(III)chlorid-Hydrat, welches durch die Formel IrCl₃ · x H₂O · y HCl mit x = 1,5 bis 5 und y = 0 bis 1, insbesondere 0,1 bis 0,7, dargestellt werden kann und dessen wesentliches Merkmal es ist, dass das darin enthaltene Iridium (Gesamtiridium) zu ≥ 99,9% als Ir(III) (Iridium der Oxidationszahl +3) und zu ≤ 0,1% als Ir(IV) (Iridium der Oxidationszahl +4) vorliegt. Der Begriff "hochrein" bezieht sich insofern insbesondere auf den im Wesentlichen einheitlichen Oxidationszustand des enthaltenen Iridiums von +3.

Die ≥ 99,9% Ir(III) und ≤ 0,1% Ir(IV) des hochreinen Iridium(III)chlorid-Hydrats zusammen bilden dessen Gesamtiridium. Anders ausgedrückt, metallisches Iridium oder Iridiumverbindungen mit Oxidationszahlen des Iridiums verschieden von +3 bzw. +4 liegen im hochreinen Iridium(III)chlorid-Hydrat nicht vor. Mithin liegt das Iridium im hochreinen Iridium(III)chlorid-Hydrat praktisch vollständig als Ir(III) vor.

Bevorzugt enthält das hochreine Iridium(III)chlorid-Hydrat neben Iridium, Wasserstoff, Chlor und Sauerstoff keine anderen Elemente oder höchstenfalls in technisch praktisch unvermeidbaren Spurenanteilen. Beispielsweise kann Stickstoff in Spurenanteilen bis zu 0,1 Gew.-% und Kohlenstoff in Spurenanteilen bis zu 0,3 Gew.-% enthalten sein. Bevorzugt sind weder Stickstoff noch Kohlenstoff enthalten bzw. der Mengenanteil davon liegt unterhalb der jeweiligen Nachweisgrenze. Die chemische Reinheit des hochreinen Iridium(III)chlorid-Hydrats kann mittels üblicher quantitativer Elementaranalyse bestimmt werden. Das hochreine Iridium(III)chlorid-Hydrat kann mittels quantitativer Elementaranalyse bestimmte Werte in den Bereichen 50 bis 56 Gew.-% Iridium, 1,2 bis 2,5 Gew.-% Wasserstoff, 9 bis 17 Gew.-% Sauerstoff und 30 bis 34 Gew.-% Chlor aufweisen.

Die Erfindung betrifft ein Verfahren zur Herstellung hochreinen Iridium(III)chlorid-Hydrates, umfassend die Schritte:
(1) Bereitstellen mindestens eines Materials ausgewählt aus der Gruppe bestehend aus festem H₂[IrCl₆]-Hydrat, wässriger mindestens 1 gew.-%iger H₂[IrCl₆]-Lösung und festem IrCl₄-Hydrat,
(2) Versetzen des in Schritt (1) bereitgestellten mindestens einen Materials mit mindestens einer Monohydroxyverbindung ausgewählt aus der Gruppe bestehend aus Methoxyethanol, Ethoxyethanol, Methoxypropanol, Methanol, Ethanol, n-Propanol, Isopropanol, 1-Butanol, 2-Butanol und 2-Methyl-1-propanol im molaren Verhältnis Ir(IV) : Monohydroxyverbindung = 1 : 0,6 bis 1000 und 0,2- bis 48-stündiges Reagierenlassen in einem Temperaturbereich von 20 bis 120°C, gefolgt vom Entfernen flüchtiger Bestandteile aus dem so gebildeten Reaktionsgemisch, wobei der Begriff "Hochreines Iridium(III)chlorid-Hydrat" ein festes Iridium(III)chlorid-Hydrat der Formel IrCl₃ · x H₂O · y HCl mit x = 1,5 bis 5 und y = 0 bis 1 bezeichnet, und wobei das darin enthaltene Iridium zu ≥ 99,9% als Ir(III) und zu ≤ 0,1% als Ir(IV) vorliegt.

Bei dem in Schritt (1) bereitgestellten mindestens einen Material sowie der mindestens einen Monohydroxyverbindung handelt es sich um Edukte.

In Schritt (1) des erfindungsgemäßen Verfahrens wird mindestens ein Material ausgewählt aus der Gruppe bestehend aus festem H₂[IrCl₆]-Hydrat, wässriger mindestens 1 gew.-%iger H₂[IrCl₆]-Lösung und festem IrCl₄-Hydrat bereitgestellt. Bei wässriger mindestens 1 gew.-%iger H₂[IrCl₆]-Lösung handelt es sich um ein zur Bereitstellung in Schritt (1) bevorzugtes Material. Festes H₂[IrCl₆]-Hydrat ist kommerziell erhältlich, beispielsweise als H₂[IrCl₆] · H₂O von Umicore oder als H₂[IrCl₆] · n H₂O von Heraeus. Festes H₂[IrCl₆]-Hydrat der Formel H₂[IrCl₆] x 6 H₂O kann beispielsweise hergestellt werden gemäß G. Brauer, Handbuch der Präparativen Anorganischen Chemie, Band 3, Ferdinand Enke Verlag, Stuttgart 1981, Seite 1735. Festes H₂[IrCl₆]-Hydrat kann von Charge zu Charge wechselnde Anteile an Ir(III) enthalten.

Wässrige mindestens 1 gew.-%ige H₂[IrCl₆]-Lösung kann einen Gehalt an H₂[IrCl₆] im Bereich von 1 bis beispielsweise 70 Gew.-%, bevorzugt von 45 bis 53 Gew.-% aufweisen. Solche wässrigen Lösungen können hergestellt werden durch Auflösen von festem H₂[IrCl₆]-Hydrat in Wasser und/oder bevorzugt Salzsäure. Alternativ kann beispielsweise auch gemäß G. Brauer, Handbuch der Präparativen Anorganischen Chemie, Band 3, Ferdinand Enke Verlag, Stuttgart 1981, Seite 1735 verfahren werden, wobei am Ende nicht bis zur Bildung des festen H₂[IrCl₆]-Hydrats eingeengt wird, sondern nur bis zum Erreichen der gewünschten Konzentration der wässrigen H₂[IrCl₆]-Lösung. Wässrige H₂[IrCl₆]-Lösung ist auch kommerziell erhältlich, beispielsweise von Johnson Matthey in einer Konzentration mit einem Iridiumgehalt > 19 Gew.-%, von Umicore in einer Konzentration mit einem Iridiumgehalt von 23 Gew.-% und von Heraeus in einer Konzentration mit einem Iridiumgehalt von bis zu 25 Gew.-%. Wässrige H₂[IrCl₆]-Lösung kann von Charge zu Charge wechselnde Anteile an Ir(III) enthalten.

Festes IrCl₄-Hydrat ist kommerziell erhältlich, beispielsweise als IrCl₄/IrCl₃ · n H₂O von Umicore oder als IrCl₄ · n H₂O von Heraeus. Festes IrCl₄-Hydrat kann von Charge zu Charge wechselnde Anteile an Ir(III) enthalten.

In Schritt (2) des erfindungsgemäßen Verfahrens wird das in Schritt (1) bereitgestellte mindestens eine Material mit mindestens einer Monohydroxyverbindung ausgewählt aus der Gruppe bestehend aus Methoxyethanol, Ethoxyethanol, Methoxypropanol, Methanol, Ethanol, n-Propanol, Isopropanol, 1-Butanol, 2-Butanol und 2-Methyl-1-propanol im Verhältnis 1 Mol Ir(IV) : 0,6 bis 1000 Mol Monohydroxyverbindung versetzt und 0,2 bis 48 Stunden in einem Temperaturbereich von 20 bis 120°C reagieren gelassen.

Neben einem gegebenenfalls stattfindenden Zusatz von Wasser werden dem Reaktionsgemisch bevorzugt keine weiteren Stoffe zugesetzt.

Die mindestens eine Monohydroxyverbindung dient als Reduktionsmittel, ihre Hydroxylgruppe ist primär oder sekundär.

Monohydroxyverbindungen sind ausgewählt aus der Gruppe bestehend aus Methoxyethanol, Ethoxyethanol, Methoxypropanol, Methanol, Ethanol, n-Propanol, Isopropanol, 1-Butanol, 2-Butanol und 2-Methyl-1-propanol.

Bevorzugt sind jedoch die in jedem Verhältnis mit Wasser mischbaren Monoalkohole Methanol, Ethanol, n-Propanol und/oder Isopropanol.

Bei den in jedem Verhältnis mit Wasser mischbaren Monoalkoholen Methanol, Ethanol und Isopropanol handelt es sich um in Schritt (2) des erfindungsgemäßen Verfahrens bevorzugt verwendete Monohydroxyverbindungen.

Das molare Verhältnis Ir(IV): Monohydroxyverbindung(en) beträgt 1 : 0,6 bis 1000, bevorzugt 1 : 0,6 bis 100, insbesondere 1 : 0,6 bis 10, speziell 1 : 1 bis 10 oder ganz besonders 1 : 2 bis 10. Um Missverständnissen vorzubeugen, die hier genannten molaren Verhältnisse beziehen sich nur auf in dem in Schritt (1) bereitgestellten mindestens einen Material enthaltenes Ir(IV). Mit anderen Worten, darin gegebenenfalls enthaltenes Iridium mit einer von +4 verschiedenen Oxidationsstufe, beispielsweise Iridium mit der Oxidationsstufe +3, wird nicht in die Berechnung des molaren Verhältnisses einbezogen.

Die im Reaktionsgemisch herrschende Reaktionstemperatur liegt bei 20 bis 120 °C, bevorzugt 50 bis 100 °C. Beispielsweise kann unter Rückflussbedingungen, d.h. bei Rückflusstemperatur gearbeitet werden. Bevorzugt wird während Schritt (2) gerührt. Es ist bevorzugt, bei Normaldruck zu arbeiten.

Insbesondere abhängig von der Art der gewählten Edukte bzw. Reaktanden, deren Konzentration und Molverhältnis sowie der Reaktionstemperatur kann die Reaktionsdauer im Bereich von 0,2 bis 48 Stunden variieren. Bevorzugt liegt die Reaktionsdauer im Bereich von 0,5 bis 6 Stunden.

Im Zuge von Schritt (2) erfolgt eine Reduktionsreaktion. Schritt (2) ist vollständig abgelaufen bzw. beendet, bevor eine Bildung metallischen Iridiums beginnt. Die Bildung metallischen Iridiums kann beispielsweise an der Ausfällung und/oder Abscheidung dessen visuell erkannt werden. Es ist zweckmäßig, den Zeitpunkt der Vollständigkeit der Reduktionsreaktion bzw. des Endes von Schritt (2) zu erfassen. Bevorzugt endet Schritt (2) oder wird zum Zeitpunkt der Vollständigkeit der Reduktionsreaktion beendet, beispielsweise durch Abkühlen des Reaktionsgemischs und/oder im Zuge der den Abschluss von Schritt (2) darstellenden Entfernung flüchtiger Bestandteile aus dem gebildeten Reaktionsgemisch.

Der Reaktionsverlauf und/oder insbesondere die Vollständigkeit der Reaktion im Sinne einer praktisch vollständigen Reduktion von Ir(IV) zu Ir(III) kann mittels einer dem Fachmann geläufigen üblichen Redoxtitration verfolgt werden, allerdings nicht mit höchstmöglicher Präzision. Beispielsweise erlaubt die potentiometrische Titration des Titranden Ir(IV) mit Hydrochinon als Titrant in salzsaurem Milieu keine genauere Differenzierung als die Feststellung eines Verhältnisses von > 98% Ir(III) : < 2% Ir(IV). Somit können auch die in Schritt (2) abhängig vom in Schritt (1) bereitgestellten mindestens einen Material und gewählter Monohydroxyverbindung bevorzugt einzustellenden Reaktionsparameter nicht höchstmöglich präzise mittels Redoxtitration bestimmt werden. Letztendlich erlaubt eine Redoxtitration nur eine annähernde Bestimmung der Vollständigkeit der Reaktion bzw. des Zeitpunktes der Vollständigkeit der Reduktionsreaktion des Schrittes (2).

Anstelle einer Redoxtitration können Reaktionsverlauf und/oder insbesondere die Vollständigkeit der Reaktion ESR-spektroskopisch (ESR = Elektronenspinresonanz) verfolgt bzw. beobachtet werden. Beispielsweise können Proben während oder am Ende oder nach Abschluss von Schritt (2) genommen und mittels ESR-Spektroskopie auf das Verhältnis Ir(IV) : Ir(III) untersucht werden. Es kann ein übliches ESR-Spektrometer, beispielsweise Bruker ESP 300E, verwendet werden. Beispielsweise können die ESR-Messungen bei folgenden Messbedingungen vorgenommen werden: Mikrowellenleistung beispielsweise im Bereich von 2 bis 200 µW; feste Mikrowellenfrequenz beispielsweise im Bereich von 9 bis 10 GHz; Probentemperatur beispielsweise im Bereich von 2 bis 300 K, bevorzugt bei 4,2 K; kontinuierlich variiertes Magnetfeld beispielsweise im Bereich von 500 bis 10000 G. Durch Korrelation von Ergebnissen der Redoxtitration mit ESR-Spektren konnte die Anmelderin einen linearen Zusammenhang auffinden, aus dem abgeleitet werden konnte, dass die ESRspektroskopische Methode die Bestimmung des Verhältnisses von Ir(III) : Ir(IV) im Reaktionsgemisch oder im in Schritt (2) gebildeten Reaktionsgemisch bzw. im nach Abschluss von Schritt (2) erhaltenen Produkt mit einer eine Differenzierung von ≥ 99,9% Ir(III) : ≤ 0,1% Ir(IV) ermöglichenden Präzision erlaubt.

Die Auswahl der chemischen und physikalischen Parameter des erfindungsgemäßen Verfahrens, d.h. der Edukte nach Art und Menge, der Verfahrensführung und der Verfahrensbedingungen bzw. Verfahrensparameter kann unter Zuhilfenahme bzw. Anwendung der ESR-Spektroskopie bzw. der vorerwähnten ESR-Messmethodik gezielt so erfolgen, dass Schritt (2) des erfindungsgemäßen Verfahrens vollständig ablaufen kann bzw. endet oder beendet werden kann, bevor eine Bildung metallischen Iridiums beginnt. Die ESR-Spektroskopie kann hier also zwecks Erfolgskontrolle bei der Auswahl der chemischen und physikalischen Verfahrensparameter dienen. So kann bei Konstanthaltung aller bis auf einen der folgenden Parameter:
- Art des in Schritt (1) bereitgestellten mindestens einen Materials im zu Beginn von Schritt (2) gebildeten Reaktionsgemisch,
- Konzentration des in Schritt (1) bereitgestellten mindestens einen Materials im zu Beginn von Schritt (2) gebildeten Reaktionsgemisch,
- Art der mindestens einen Monohydroxyverbindung im zu Beginn von Schritt (2) gebildeten Reaktionsgemisch,
- Konzentration der mindestens einen Monohydroxyverbindung im zu Beginn von Schritt (2) gebildeten Reaktionsgemisch,
- Molverhältnis von Ir(IV) : mindestens einen Monohydroxyverbindung im zu Beginn von Schritt (2) gebildeten Reaktionsgemisch,
- Reaktionstemperatur
- Reaktionsdauer
- Temperatur während der Entfernung flüchtiger Bestandteile aus dem im Verlauf von Schritt (2) gebildeten Reaktionsgemisch
- Dauer der Entfernung flüchtiger Bestandteile aus dem im Verlauf von Schritt (2) gebildeten Reaktionsgemisch
unter Anwendung der ESR-Spektroskopie bzw. der vorerwähnten ESR-Messmethodik bestimmt werden, wie der eine variable Parameter zu wählen ist, damit Schritt (2) des erfindungsgemäßen Verfahrens vollständig ablaufen kann bzw. endet oder beendet werden kann, bevor eine Bildung metallischen Iridiums beginnt. Anders ausgedrückt, der Zeitpunkt der Vollständigkeit der Reduktionsreaktion kann so mit hoher Präzision bestimmt werden. Dabei liegen sowohl die konstanten Parameter als auch der variable Parameter innerhalb der jeweiligen vorerwähnten qualitativen bzw. quantitativen Auswahlbereiche.

Unter Anwendung der ESR-Spektroskopie konnten so verschiedene erfolgreiche Ausführungsformen des erfindungsgemäßen Verfahrens erarbeitet werden, die jeweils direkt zu hochreinem Iridium(III)chlorid-Hydrat führen, d.h. ohne eines oder mehrerer Reinigungsschritte während oder nach Beendigung von Schritt (2) zu bedürfen und ohne oder praktisch ohne dass metallisches Iridium gebildet wird. Die nachstehend offenbarten Beispiele 1 bis 4 sind Beispiele für erfolgreiche Ausführungsformen bzw. dergestalt erarbeitete erfolgreiche Ausführungsformen.

In Schritt (2) bzw. am Ende von Schritt (2), d.h. nach dem 0,2- bis 48-stündigen Reagierenlassen werden flüchtige Bestandteile aus dem gebildeten Reaktionsgemisch entfernt. Dabei wird hochreines Iridium(III)chlorid-Hydrat als fester Rückstand gewonnen. Das Entfernen flüchtiger Bestandteile wie Wasser, Chlorwasserstoff, nicht umgesetzte Monohydroxyverbindung(en) und Oxidationsprodukt(e) der Monohydroxyverbindung(en) geschieht beispielsweise durch Abdestillieren oder Verdampfen. Beispielsweise wird dabei bei von außen auf das das gebildete Reaktionsgemisch enthaltende Behältnis einwirkenden Temperaturen im Bereich von 30 bis 120 °C, bevorzugt 70 bis 100 °C gearbeitet. Bevorzugt wird die Entfernung flüchtiger Bestandteile vakuumunterstützt durchgeführt, beispielsweise unter Verwendung eines Rotationsverdampfers. Das Entfernen flüchtiger Bestandteile bzw. Schritt (2) ist beendet, sobald ein amorpher Feststoff mit dem gewünschten Iridiumgehalt, d.h. mit einem Iridiumgehalt im Bereich von 50 bis 56 Gew.-% erhalten worden ist. Bei dem amorphen Feststoff handelt es sich um hochreines Iridium(III)chlorid-Hydrat.

Das so hergestellte hochreine Iridium(III)chlorid-Hydrat eignet sich hervorragend als Ausgangsprodukt zur Herstellung von als Triplett-Emitter in OLEDs verwendbaren Ir(III)-Komplexverbindungen.

### Beispiele

### Beispiel 1 (Herstellung von hochreinem Iridium(III)chlorid-Hydrat):

In einen 2000 mL Kolben wurden 86,65 g wässrige H₂[IrCl₆]-Lösung (Ir-Gehalt 24,8 Gew.-%) eingewogen und 22,27 g Ethanol zugegeben. Der Kolben wurde an einen Rotationsverdampfer gehängt und der Kolbeninhalt auf eine Temperatur von 71 °C geheizt. Die Vorlage wurde verschlossen, damit entstehendes Kondensat zurück läuft. Nach 4,5 Stunden bei 71 °C wurde der Druck auf 80 mbar reduziert und während 40 Stunden bei einer Heizbadtemperatur von 80 °C von flüchtigen Bestandteilen befreit. Als Produkt wurde ein olivgrüner amorpher Feststoff erhalten. Es kam nicht zur Bildung metallischen Iridiums.

### Elementaranalyse des Produktes:

Iridium: 52,9 Gew.-%
Wasserstoff: 1,6 Gew.-%
Chlor: 33,6 Gew.-%
Sauerstoff: 11,0 Gew.-%

Das ESR-spektroskopisch bestimmte Verhältnis von Ir(III) zu Ir(IV) im erhaltenen Produkt betrug ≥ 99,9% : ≤ 0,1%.

Analog zu Beispiel 1 wurden weitere Beispiele 2 bis 4 durchgeführt. Es kam in keinem der Beispiele zur Bildung metallischen Iridiums. Nachfolgende Tabelle bietet eine Übersicht über die Beispiele 1 bis 4.

| | Beispiel 1 | Beispiel 2 |
|---|---|---|
| In Schritt (1) bereitgestelltes Material | 86,65 g wässrige H₂[IrCl₆]-Lösung (Ir-Gehalt 24,8 Gew.-%, 92% Ir(IV) : 8% Ir(III)) | 86,96 g wässrige H₂[IrCl₆]-Lösung (Ir-Gehalt 23,0 Gew.-%, 93% Ir(IV) : 7% Ir(III)) |
| Monohydroxyverbindung | 22,27 g Ethanol | 4,47 g Ethanol |
| Reaktionsdauer (h) | 4,5 | 14 |
| Reaktionstemperatur (°C) | 71 | 73 |
| Dauer der Befreiung von flüchtigen Bestandteilen (h) | 40 | 38 |
| Heizbadtemperatur (°C) | 80 (bei 80 mbar) | 80 (bei 80 mbar) |
| | | |

| Produktdaten: | | |
|---|---|---|
| Ir (Gew.-%) | 52,9 | 51,9 |
| H (Gew.-%) | 1,6 | 2,4 |
| Cl (Gew.-%) | 33,6 | 32,2 |
| O (Gew.-%) | 11,0 | 16,8 |
| Ir(III) : Ir(IV) (ESR-spektroskopisch) | ≥ 99,9% : ≤ 0,1% | ≥ 99,9% : ≤ 0,1% |

| | Beispiel 3 | Beispiel 4 |
|---|---|---|
| In Schritt (1) bereitgestelltes Material | 40,9 g wässrige H₂[IrCl₆]-Lösung (Ir-Gehalt 22,0 Gew.-%, 94% Ir(IV) : 6% Ir(III)) | 41,46 g wässrige H₂[IrCl₆]-Lösung (Ir-Gehalt 21,7 Gew.-%, 93% Ir(IV) : 7% Ir(III)) |
| Monohydroxyverbindung | 13,23 g Isopropanol | 13,1 g 1-Butanol |
| Reaktionsdauer (h) | 5,5 | 5 |
| Reaktionstemperatur (°C) | 70 | 72 |
| Dauer der Befreiung von flüchtigen Bestandteilen (h) | 24 | 26 |
| Heizbadtemperatur (°C) | 80 (bei 60 mbar) | 80 (bei 50 mbar) |
| | | |

| Produktdaten: | | |
|---|---|---|
| Ir (Gew.-%) | 53,9 | 54,2 |
| H (Gew.-%) | 1,4 | 1,4 |
| Cl (Gew.-%) | 31,8 | 30,7 |
| O (Gew.-%) | 9,1 | 9,5 |
| Ir(III) : Ir(IV) (ESR-spektroskopisch) | ≥ 99,9% : ≤ 0,1% | ≥ 99,9% : ≤ 0,1% |

## Patentansprüche

1. Verfahren zur Herstellung hochreinen Iridium(III)chlorid-Hydrates, umfassend die Schritte:
(1) Bereitstellen mindestens eines Materials ausgewählt aus der Gruppe bestehend aus festem H₂[IrCl₆]-Hydrat, wässriger mindestens 1 gew.-%iger H₂[IrCl₆]-Lösung und festem IrCl₄-Hydrat,
(2) Versetzen des in Schritt (1) bereitgestellten mindestens einen Materials mit mindestens einer Monohydroxyverbindung ausgewählt aus der Gruppe bestehend aus Methoxyethanol, Ethoxyethanol, Methoxypropanol, Methanol, Ethanol, n-Propanol, Isopropanol, 1-Butanol, 2-Butanol und 2-Methyl-1-propanol im molaren Verhältnis Ir(IV) : Monohydroxyverbindung = 1 : 0,6 bis 1000 und 0,2- bis 48-stündiges Reagierenlassen in einem Temperaturbereich von 20 bis 120°C, gefolgt vom Entfernen flüchtiger Bestandteile aus dem so gebildeten Reaktionsgemisch, wobei der Begriff "Hochreines Iridium(III)chlorid-Hydrat" ein festes Iridium(III)chlorid-Hydrat der Formel IrCl₃ · x H₂O · y HCl mit x = 1,5 bis 5 und y = 0 bis 1 bezeichnet, und wobei das darin enthaltene Iridium zu ≥ 99,9% als Ir(III) und zu ≤ 0,1% als Ir(IV) vorliegt.

2. Verfahren nach Anspruch 1, wobei die mindestens eine Monohydroxyverbindung ausgewählt ist aus der Gruppe bestehend aus Methanol, Ethanol und Isopropanol.

3. Verfahren nach Anspruch 1 oder 2, wobei das molare Verhältnis Ir(IV): Monohydroxyverbindung(en) 1 : 0,6 bis 100 beträgt.

4. Verfahren nach Anspruch 1, 2 oder 3, wobei die Reaktionstemperatur bei 50 bis 100 °C liegt.

5. Verfahren nach einem der vorhergehenden Ansprüche, wobei die Reaktionsdauer im Bereich von 0,5 bis 6 Stunden liegt.

6. Verfahren nach einem der vorhergehenden Ansprüche, wobei Schritt (2) beendet wird, bevor eine Bildung metallischen Iridiums beginnt.

7. Verfahren nach einem der vorhergehenden Ansprüche, wobei Reaktionsverlauf und/oder Vollständigkeit der Reaktion ESR-spektroskopisch verfolgt werden.

8. Verfahren nach einem der vorhergehenden Ansprüche, wobei die Auswahl der chemischen und physikalischen Verfahrensparameter unter Anwendung der ESR-Spektroskopie gezielt so erfolgt, dass Schritt (2) endet oder beendet werden kann, bevor eine Bildung metallischen Iridiums beginnt.

9. Verfahren nach einem der vorhergehenden Ansprüche, wobei
das Entfernen der flüchtigen Bestandteile durch Abdestillieren oder Verdampfen erfolgt.

10. Verfahren nach Anspruch 9, wobei das Abdestillieren oder Verdampfen bei von außen auf das das gebildete Reaktionsgemisch enthaltende Behältnis einwirkenden Temperaturen im Bereich von 30 bis 120 °C gearbeitet wird.

11. Verfahren nach Anspruch 9 oder 10, wobei das Abdestillieren oder Verdampfen vakuumunterstützt erfolgt.

## Claims

1. Method for the preparation of highly pure iridium(III) chloride hydrate, comprising the steps of:
(1) Providing at least one material selected from the group consisting of solid H₂[IrCl₆] hydrate, aqueous at least 1 wt.% H₂[IrCl₆] solution, and solid IrCl₄ hydrate;
(2) adding, to the at least one material provided in step (1), at least one monohydroxy compound selected from the group consisting of methoxy ethanol, ethoxy ethanol, methoxy propanol, methanol, ethanol, n-propanol, iso-propanol, 1-butanol, 2-butanol, and 2-methyl-1-propanol at a molar ratio of Ir(IV) : monohydroxy compound = 1 : 0.6 to 1,000, and allowing this to react in a temperature range of 20 to 120°C, followed by removing volatile components from the reaction mixture thus formed, whereby the term "highly pure iridium(III) chloride hydrate" shall denote a solid iridium(III) chloride hydrate of formula IrCl₃ · x H₂O · y HCl whereby x = 1.5 to 5 and y = 0 to 1, and whereby the iridium contained therein is ≥ 99.9% Ir(III) and ≤ 0.1% Ir(V).

2. Method according to claim 1, whereby the at least one monohydroxy compound is selected from the group consisting of methanol, ethanol, and isopropanol.

3. Method according to claim 1 or 2, whereby the molar ratio Ir(IV) :
monohydroxy compound(s) is 1 : 0.6 to 100.

4. Method according to claim 1, 2 or 3, whereby the reaction temperature is 50 to 100°C.

5. Method according to any one of the preceding claims, whereby the reaction time is in the range of 0.5 to 6 hours.

6. Method according to any one of the preceding claims, whereby step (2) is terminated before a formation of metallic iridium commences.

7. Method according to any one of the preceding claims, whereby the course of the reaction and/or the completeness of the reaction is monitored by ESR spectroscopy.

8. Method according to any one of the preceding claims, whereby the selection of the chemical and physical process parameters based on the application of ESR Spectroscopy is done specifically such that step (2) ends or can be terminated before a formation of metallic iridium commences.

9. Method according to any one of the preceding claims, whereby the volatile components are removed by distillation or evaporation.

10. Method according to claim 9, whereby the distillation or evaporation is done at temperatures in the range of 30 to 120°C acting from outside on the container containing the reaction mixture thus formed.

11. Method according to claim 9 or 10, whereby the distillation or evaporation takes place aided by a vacuum.

## Revendications

1. Procédé pour la fabrication de chlorure d'iridium (III) hydraté de grande pureté, comprenant les étapes suivantes :
(1) mise à disposition au moins d'une matière sélectionnée dans le groupe composé d'hydrate H₂[IrCl₆] solide, de solution H₂[IrCl₆] aqueuse au moins de 1% en poids et d'hydrate IrCl₄ solide,
(2) mélange au moins d'une matière mise à disposition dans l'étape (1) avec au moins un composé monohydroxylé sélectionné dans le groupe composé de méthoxyéthanol, éthoxyéthanol, méthoxypropanol, méthanol, éthanol, n-propanol, isopropanol, butan-1-ol, butan-2-ol et 2-méthylpropan-1-ol dans le rapport molaire de Ir(IV) : composé monohydroxylé = 1 : 0,6 à 1000 et laisser réagir durant 0,2 à 48 heures dans une plage de température de 20 à 120°C, suivi de l'élimination de composés volatils issus du mélange réactionnel ainsi formé, le terme « chlorure d'iridium (III) hydraté de grande pureté » désignant un chlorure d'iridium (III) hydraté solide de la formule IrCl₃ x H₂O . y HCl avec x = 1,5 à 5 et y = 0 à 1 et l'iridium contenu étant présent en quantité ≥ à 99,9% comme Ir(III) et ≤ à 0,1% comme Ir(IV).

2. Procédé conformément à la revendication n°1, au moins un composé monohydroxylé étant sélectionné dans le groupe composé de méthanol, éthanol et isopropanol.

3. Procédé conformément à la revendication n°1 ou n°2, le rapport molaire Ir(IV) : composé(s) monohydroxylé(s) étant de 1 : 0,6 à 100.

4. Procédé conformément à la revendication n°1, n°2 ou n°3, la température de réaction se situant entre 50 et 100°C.

5. Procédé conformément à l'une des revendications précédentes, le temps de réaction se situant dans la plage de 0,5 à 6 heures.

6. Procédé conformément à l'une des revendications précédentes, l'étape (2) étant terminée avant le début d'une formation d'iridium métallique.

7. Procédé conformément à l'une des revendications précédentes, le processus de réaction et/ou l'intégralité de la réaction étant suivis par spectroscopie ESR.

8. Procédé conformément à l'une des revendications précédentes, la sélection des paramètres chimiques et physiques du procédé s'opérant de manière ciblée en utilisant la spectroscopie ESR de manière à ce que l'étape (2) se termine ou puisse être terminée avant le début d'une formation d'iridium métallique.

9. Procédé conformément à l'une des revendications précédentes, l'élimination des composés volatiles s'opérant par distillation ou par évaporation.

10. Procédé conformément à la revendication n°9, la distillation ou l'évaporation étant réalisée à des températures comprises entre 30 et 120°C, agissant depuis l'extérieur sur le récipient contenant le mélange réactionnel formé.

11. Procédé conformément à la revendication n°9 ou n°10, la distillation ou l'évaporation s'opérant par dépression.
